# EUROPÄISCHE PATENTSCHRIFT

(11) **EP 1 604 505 B1**
(45) Veröffentlichungstag und Bekanntmachung des Hinweises auf die Patenterteilung: **25.10.2006**
(21) Anmeldenummer: 04718307.4
(22) Anmeldetag: 08.03.2004
(51) Int. Cl.: H04L 29/06

(54) **LADEN VON MEDIENDATEN IN EINEN TRAGBAREN DATENTRÄGER**
LOADING MEDIA DATA INTO A PORTABLE DATA CARRIER
CHARGEMENT DE DONNEES MEDIATIQUES SUR UN SUPPORT DE DONNEES PORTABLE

(30) Priorität: 10.03.2003 DE 10310351
(43) Veröffentlichungstag der Anmeldung: 14.12.2005
(73) Patentinhaber: Giesecke & Devrient GmbH, 81667 München (DE)
(72) Erfinder: CIESINGER, Daniel, 80637 München (DE)
(74) Vertreter: Dendorfer, Claus
(86) Internationale Anmeldenummer: PCT/EP2004/002404
(87) Internationale Veröffentlichungsnummer: WO 2004/082234

(56) Entgegenhaltungen:
- WO-A-00/29928
- WO-A-03/005145

## Beschreibung

Die Erfindung betrifft allgemein tragbare Datenträger wie z.B. Speicherkarten mit eigener Intelligenz (smart cards) oder kompakte Speichermodule in unterschiedlichen Bauformen. Spezieller betrifft die Erfindung das Laden von Mediendaten, wie z.B. Bild- oder Ton- oder Videodaten, in derartige Datenträger.

Tragbare Datenträger für das Speichern von Mediendaten sind in unterschiedlichen Ausgestaltungen gut bekannt. Der Artikel "Das Gigabyte im Geldbeutel" von Clemens Gleich in der Zeitschrift c't, Heise-Verlag, Heft 8/2002, Seiten 164 -166, gibt einen Überblick über die gegenwärtig unter den Marken und Handelsnamen CompactFlash, SmartMedia, Memory Stick, Secure Digital und MultiMediaCard angebotenen Produkte. Eine als Magic Gate bezeichnete Ausführung des Memory Stick sowie die Secure-Digital-Karten weisen Systeme zur Verwaltung von Digitalrechten auf, um unerlaubtes Kopieren der Mediendaten zu verhindern. Solche Systeme sind in dem Artikel "Blitzgescheit" von Clemens Gleich in der Zeitschrift c't, Heise-Verlag, Heft 8/2002, Seiten 168 -172, insbesondere im Kasten auf Seite 169, beschrieben.

WO03/005145 offenbart eine Vorrichtung und ein Verfahren zur Verwaltung von digitalen Rechten mit digitalen Gutscheinen.

Das Problem eines sicheren und dabei die rechtmäßige Benutzung nicht behindernden Kopierschutzes für Mediendaten ist jedoch nach wie vor nicht zufriedenstellend gelöst. Sicherheitslücken bestehen z.B. dann, wenn der Benutzer Mediendaten von einem Server des Rechteinhabers auf den Datenträger herunterlädt. Der Benutzer verwendet hierfür üblicherweise einen Internet-Browser, um auf den Server zuzugreifen und die Mediendaten auf einem persönlichen Computer des Benutzers zwischenzuspeichern. Erst in einem zweiten Schritt werden die Mediendaten dann an den Datenträger überspielt. Die im persönlichen Computer des Benutzers gespeicherten. Mediendaten sind jedoch ungeschützt und können leicht dupliziert werden.

Weitere generelle Probleme des Standes der Technik betreffen die Schwierigkeit einer zuverlässigen Authentisierung des letztendlichen Empfängers der Mediendaten gegenüber dem Server sowie die Schwierigkeit einer sicheren Schlüsselverwaltung.

Die Erfindung hat die Aufgabe, die genannten Probleme zumindest zum Teil zu lösen. Insbesondere soll durch die Erfindung eine Technik zum Laden von Mediendaten in einen tragbaren Datenträger bereitgestellt werden, die ein unbefugtes Kopieren der Mediendaten möglichst verhindert. Vorzugsweise soll die Erfindung möglichst benutzerfreundlich in der Handhabung sein.

Erfindungsgemäß wird diese Aufgabe ganz oder zum Teil gelöst durch ein Verfahren mit den Merkmalen von Anspruch 1, einen Datenträger gemäß Anspruch 8 und ein Computerprogrammprodukt gemäß Anspruch 10. Die abhängigen Ansprüche definieren bevorzugte Ausgestaltungen der Erfindung.

Die Aufzählungsreihenfolge der Schritte in den Verfahrensansprüchen soll nicht als Einschränkung des Schutzbereichs verstanden werden. Es sind vielmehr Ausgestaltungen der Erfindung vorgesehen, bei denen diese Verfahrensschritte in anderer Reihenfolge oder ganz oder teilweise parallel oder ganz oder teilweise ineinander verzahnt (interleaved) ausgeführt werden. Dies betrifft insbesondere die in der Regel gemeinsam ausgeführten Schritte des Übertragens der Mediendaten über den Datenübertragungskanal und des Einschreibens der Mediendaten in den Speicher des Datenträgers.

Die Erfindung geht von der Grundidee aus, den Datenträger mit einer Funktionalität zum Aufbauen eines verschlüsselten Datenübertragungskanals mit einem vertrauenswürdigen, nicht-lokalen Server auszustatten. Durch die Verschlüsselung sind die auf dem Kanal übertragenen Mediendaten auch dann geschützt, wenn der Datenübertragungskanal physikalisch über ein nicht vertrauenswürdiges Gerät verläuft. Zwar können möglicherweise die verschlüsselten Daten dupliziert werden; diese sind jedoch ohne Kenntnis des verwendeten Schlüssels für einen Raubkopierer nutzlos. Auf logischer Ebene stellt der Datenübertragungskanal damit vorzugsweise eine direkte, ausspähungsgeschützte Verbindung zwischen dem nicht-lokalen Server und dem Datenträger dar.

Durch die erfindungsgemäße Lehre wird ein zuverlässiger und sicherer Weg zum Laden der Mediendaten auf den tragbaren Datenträger geschaffen. Dies vermeidet Verluste durch unerlaubte Kopien und erhöht die Bereitschaft von Rechteinhabern, Mediendaten über innovative Vertriebswege anzubieten. Der Komfort für den rechtmäßigen Benutzer wird durch die Erfindung nicht beeinträchtigt; im Gegenteil können die erfindungsgemäßen Vorgänge automatisch und damit für den Benutzer einfacher als die bisherigen manuellen Vorgänge ausgeführt werden. Besonders hoher Bedienkomfort kann geboten werden, wenn eine Benutzerschnittstelle für das Initiieren des Ladevorgangs von einem Browser, der auf dem Bediengerät läuft, bereitgestellt wird.

In bevorzugten Ausgestaltungen kommunizieren der Datenträger und der Server miteinander über mindestens ein Internet-Protokoll. Hierunter sind insbesondere die Protokolle TCP/IP (Transmission Control Protocol / Internet Protocol), UDP/ IP (User Datagram Protocol / Internet Protocol), IPSec (IP Security Protocol), TLS (Transport Layer Security), SSL (Secure Sockets Layer), HTTP (Hypertext Transfer Protocol) und S-HTTP (Secure HTTP) zu verstehen. Diese Protokolle sind an sich gut bekannt und in den entsprechenden RFC-Normen bzw. anderen Norm-Dokumenten im Detail beschrieben. Die genannten Protokolle als solche sind nicht Gegenstand der vorliegenden Erfindung.

Vorzugsweise wird für die verschlüsselte Kommunikation auf dem Datenübertragungskanal ein Sitzungsschlüssel verwendet. Es ist vorteilhaft, auch bei der Vereinbarung des Sitzungsschlüssels auf einen sicheren Ausspähungsschutz zu achten. Zu diesem Zweck kann z.B. vorgesehen sein, daß einer der Kommunikationspartner - entweder der Datenträger oder der Server - den Sitzungsschlüssel erzeugt und diesen dann mit einem öffentlichen Schlüssel des anderen Kommunikationspartners verschlüsselt und an diesen anderen Kommunikationspartner sendet. Der Sitzungsschlüssel wird dadurch vor einem unbefugten Lauscher - z.B. dem nicht als vertrauenswürdig angesehenen Bediengerät, über das die Datenübertragung physikalisch verläuft - verborgen gehalten.

Das erfindungsgemäße Computerprogrammprodukt weist Programmbefehle auf, um das erfindungsgemäße Verfahren in einem Datenträger zu implementieren. Ein derartiges Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Im Hinblick auf den Datenträger kann das Computerprogrammprodukt ein Datenträger-Betriebssystem oder ein Teil davon sein.

Der tragbare Datenträger und das Computerprogrammprodukt weisen in bevorzugten Weiterbildungen Merkmale auf, die den oben erwähnten und/oder den in den abhängigen Verfahrensansprüchen genannten Merkmalen entsprechen.

Weitere Merkmale, Aufgaben und Vorteile der Erfindung ergeben sich aus der folgenden Beschreibung eines Ausführungsbeispiels und mehrerer Ausführungsalternativen. Es wird auf die schematischen Zeichnungen verwiesen, in denen zeigen:
Fig.1 ein Blockdiagramm mit Komponenten, die an dem Vorgang des Ladens von Mediendaten in einen Datenträger beteiligt sind, und
Fig. 2 ein beispielhaftes Ablaufdiagramm eines Ladevorgangs.

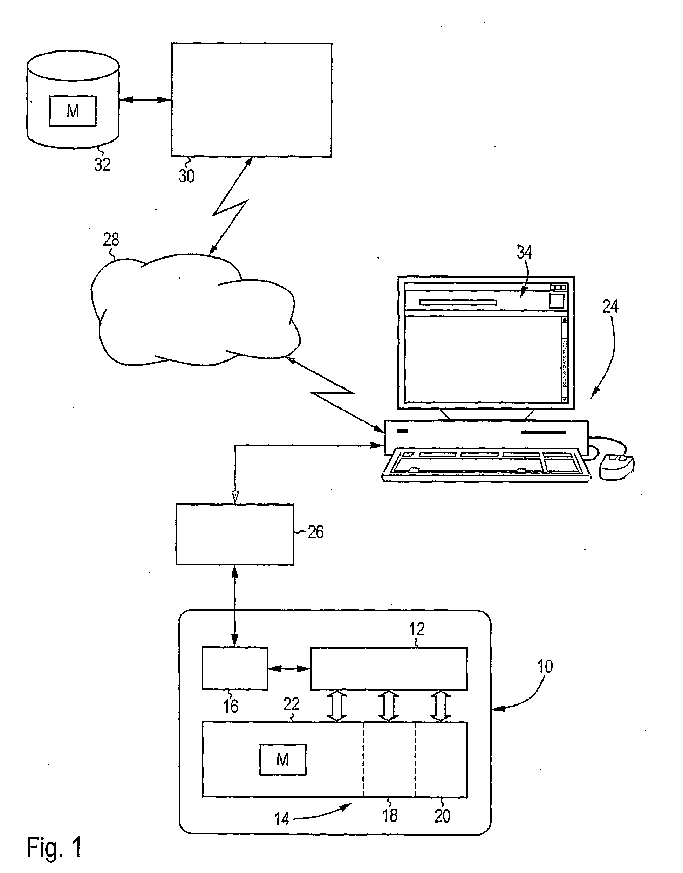

In Fig.1 ist ein tragbarer Datenträger 10 gezeigt, der beispielsweise als Chipkarte oder als kompaktes Chipmodul ausgebildet ist. Insbesondere kann der Datenträger 10 mit einem oder mehreren der unter den Marken und Handelsnamen CompactFlash, SmartMedia, Memory Stick, MultiMediaCard und Secure Digital bekannten Produkte kompatibel sein und sich dadurch zur Verwendung in gegenwärtig handelsüblichen Abspielgeräten eignen.

In an sich bekannter Weise weist der Datenträger 10 einen Halbleiterchip auf, auf dem ein Prozessorkern 12, ein Speicher 14 und eine Schnittstelle 16 zur drahtgebundenen oder drahtlosen Kommunikation ausgebildet sind. Der Speicher 14 weist mehrere unterschiedliche Bereiche auf, nämlich im vorliegenden Ausführungsbeispiel einen als maskenprogrammiertes ROM ausgestalteten Festwertspeicher 18, einen als RAM ausgestalteten Arbeitsspeicher 20 und einen als EEPROM oder FLASH-Speicher ausgestalteten beschreibbaren Speicher 22. In an sich bekannter Weise enthält der Festwertspeicher 18 Steuerprogramme für den Prozessorkern 12 des Datenträgers 10. Der Arbeitsspeicher 20 dient zur temporären Aufnahme von Werten, und der beschreibbare Speicher 22 ist insbesondere zur Speicherung von Mediendaten M, beispielsweise Bild- oder Audio- oder Videodaten, vorgesehen.

Der Datenträger 10 weist im vorliegend beschriebenen Ausführungsbeispiel keine eigenen Bedienungs- und Anzeigeelemente auf. Es ist vielmehr ein externes Bediengerät 24 vorgesehen, das im vorliegenden Ausführungsbeispiel als persönlicher Computer mit Ausgabemitteln, wie z.B. einem Bildschirm, und Eingabemitteln, wie z.B. einer Tastatur und einer Maus, ausgestaltet ist. In Ausführungsalternativen ist das Bediengerät 24 eine kompakte Vorrichtung, wie z.B. ein Taschencomputer (handheld computer), ein persönlicher Organisator (personal digital organizer), ein Mobiltelefon oder ein auch zur Wiedergabe der Mediendaten M eingerichtetes Bedien- und Abspielgerät.

Eine Verbindungseinrichtung 26 ermöglicht die Kommunikation zwischen dem Bediengerät 24 und dem Datenträger 10, genauer dessen Schnittstelle 16. Die Verbindungseinrichtung 26 kann ein externes Gerät sein, in das der Datenträger 10 eingeschoben oder eingelegt wird oder das - bei drahtloser Kommunikation - lediglich in die Nähe des Datenträgers 10 gebracht wird. Zum Anschluß der Verbindungseinrichtung 26 an das Bediengerät 24 kann eine übliche Schnittstelle, wie z.B. USB oder PCMCIA (PC-Card), oder ein lokales Netzwerk dienen. Alternativ kann die Verbindungseinrichtung 26 auch fest in das Bediengerät 24 integriert sein.

Das Bediengerät 24 ist ferner dazu eingerichtet, eine Verbindung mit einem Netzwerk 28, hier einem Weitverkehrsnetz (WAN = wide area network), aufzunehmen. Das Netzwerk 28 kann beispielsweise das Internet sein, in welches sich das Bediengerät 24 über eine Telefonleitung oder eine DSL-Verbindung einwählt. Insbesondere, wenn das Bediengerät 24 die Funktionalität eines Mobiltelefons ausweist, kann das Netzwerk 28 auch ein zur Datenübermittlung per Funk vorgesehenes Netz, beispielsweise ein GPRS- oder UMTS-Netz sein. Über das Netzwerk 28 ist ein nicht-lokaler Server 30 erreichbar, der seinerseits auf die in einem Dateisystem 32 gespeicherten Mediendaten M zuzugreifen vermag.

Der nicht-lokale Server 30 wird vom Inhaber der Rechte an den Mediendaten M als vertrauenswürdig angesehen. Auch der Datenträger 10 gilt als vertrauenswürdig, weil er geeignete - an sich bekannte - Vorkehrungen aufweist, um ein unerlaubtes Kopieren der im beschreibbaren Speicher 22 enthaltenen Mediendaten M zu verhindern. Das Bediengerät 24 kann dagegen nicht unbedingt als vertrauenswürdig angesehen werden. Um zu verhindern, daß die Mediendaten M unverschlüsselt in dem Bediengerät 24 zwischengespeichert - und dabei möglicherweise unerlaubt dupliziert - werden, ist der Datenträger 10 dazu eingerichtet, einen verschlüsselten Datenübertragungskanal mit dem nicht-lokalen Server 30 aufzubauen.

Der verschlüsselte Datenübertragungskanal verläuft physikalisch über die Verbindungseinrichtung 26 und das Bediengerät 24, weil diese als Zwischenstationen zur Verbindung des Datenträgers 10 mit dem Netzwerk 28 erforderlich sind. Auch kann der Datenübertragungskanal im Netzwerk 28 über eine beliebige Anzahl von nicht-vertrauenswürdigen Geräten - z.B. Routern und Proxies - geleitet werden. Wegen der Verschlüsselung stellt der Datenübertragungskanal jedoch logisch eine direkte und ausspähungsgeschützte Verbindung zwischen dem nicht-lokalen Server 30 und dem Datenträger 10 dar.

Im hier beschriebenen Ausführungsbeispiel, bei dem das Netzwerk 28 das Internet ist, weist der Datenträger 10 eine geeignete Implementierung eines Internet-Protokollstapels auf, um den verschlüsselten Datenübertragungskanal mit dem Server 30 zu bilden. Dabei werden im vorliegenden Ausführungsbeispiel die Internet-Protokolle TCP/IP für die Transport- und Netzwerkschicht und HTTP für die Anwendungsschicht verwendet, wobei auf die Transportschicht eine Sicherungsschicht, die SSL verwendet, aufgesetzt ist. Das Bediengerät 24 ist jeweils so konfiguriert, daß es - ähnlich wie ein Router oder ein Proxy - einen Datenaustausch des Datenträgers 10 mit dem Netzwerk 28 über TCP/IP vermittelt. In Ausführungsalternativen werden andere Internet-Protokolle zum Datenaustausch und insbesondere zur Sicherung des Datenübertragungskanals eingesetzt.

Um eine Benutzerschnittstelle für den Datenträger 10 bereitzustellen, führt das Bediengerät 24 einen an sich bekannten Internet-Browser aus, wie er beispielsweise unter der Marke Microsoft Internet Explorer verfügbar ist. In Fig.1 ist dieser Browser symbolisch durch ein auf dem Bildschirm des Bediengeräts 24 angezeigtes Browserfenster 34 dargestellt. Im vorliegenden Ausführungsbeispiel kommuniziert der Browser mit dem Datenträger 10 über ein einfaches Protokoll. Beispielsweise kann der Datenträger 10 vom Bediengerät 24 Kommandos in Form von Lese- oder Schreibbefehlen für ein auf dem Datenträger 10 enthaltenes Dateisystem erhalten. In Ausführungsalternativen erfolgt die Kommunikation zwischen dem Bediengerät 24 und dem Datenträger 10 über Internet-Protokolle wie TCP/IP und HTTP; der Datenträger 10 weist dann die Funktionalität eines einfachen Web-Servers für den vom Bediengerät 24 ausgeführten Browser auf.

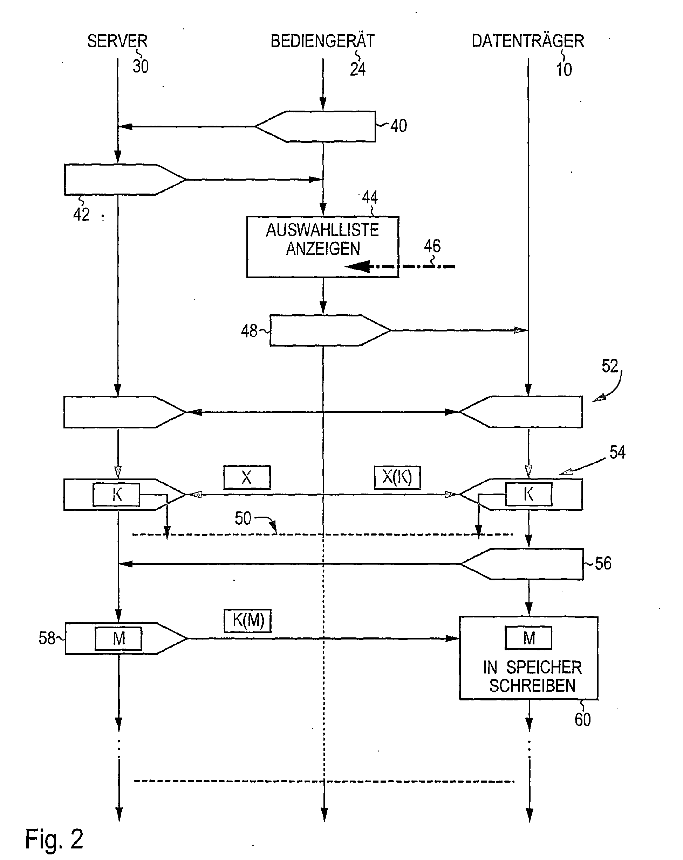

Fig. 2 zeigt einen beispielhaften Vorgang, bei dem Mediendaten M vom Server 30 in den Datenträger 10 geladen werden. Nach einer Authentisierung des Datenträgers 10 gegenüber dem Server 30 oder einer gegenseitigen Authentisierung ruft der Benutzer zunächst über den auf dem Bediengerät 24 laufenden Browser eine Auswahlseite mit den angebotenen Mediendaten M vom Server 30 ab. Das Bediengerät 24 sendet dazu in Schritt 40 einen entsprechenden HTTP-GET-Befehl an den Server 30. In Schritt 42 reagiert der Server 30, indem er eine HTTP-Antwort mit der gewünschten Auswahlseite an das Bediengerät 24 sendet. Diese Auswahlseite, die in einer geeigneten Seitenbeschreibungssprache, wie z.B. HTML, abgefaßt ist, wird von dem auf dem Bediengerät 24 laufenden Browser ausgewertet und in Schritt 44 auf dem Bildschirm des Bediengeräts 24 angezeigt.

Durch einen Mausklick 46 initiiert der Benutzer den Ladevorgang der gewünschten Mediendaten M auf den Datenträger 10. Das Bediengerät 24 übermittelt daraufhin in Schritt 48 den Ladeauftrag an den Datenträger 10. Dieser Schritt kann unmittelbar von dem Browser oder von einem geeigneten Zusatzprogramm, z.B. einem Browser-Plug-In, ausgeführt werden. Ferner können in allen genannten Ausgestaltungen zwischen den Schritten 46 und 48 weitere Kommunikationsvorgänge stattfinden, in denen z.B. der Benutzer über das Bediengerät 24 den Ladevorgang freigibt und die Bezahlung eines vereinbarten Betrags - z.B. durch Belastung einer Kreditkarte - autorisiert.

In Reaktion auf den in Schritt 48 empfangene Ladeauftrag tritt der Datenträger 10 nun in Interaktion mit dem Server 30, um einen verschlüsselten Datenübertragungskanal 50 zur Übertragung der Mediendaten M aufzubauen. Im vorliegenden Ausführungsbeispiel, das SSL als Sicherungsschicht verwendet, wird dabei zunächst eine sogenannte "Hello-Phase" durchgeführt.

Dann wird in einer Folge von Schritten, die in Fig. 2 mit dem Bezugszeichen 52 zusammengefaßt ist, eine Authentisierung durchgeführt, bei der sich z.B. zunächst der Server 30 gegenüber dem Datenträger 10 und dann der Datenträger 10 gegenüber dem Server 30 authentisiert. Insbesondere der zweitgenannte Authentisierungsvorgang ist für die Sicherheit des hier beschriebenen Verfahrens wichtig, da sich andernfalls ein nicht-vertrauenswürdiges Gerät oder Programm gegenüber dem Server 30 als Datenträger 10 ausgeben könnte.

Danach wird ein öffentlicher Schlüssel X des Servers 30 an den Datenträger 10 übermittelt. Der Datenträger 10 erzeugt nun einen zufälligen Sitzungsschlüssel K, verschlüsselt diesen mit dem öffentlichen Schlüssel X des Servers 30 und überträgt den so verschlüsselten Sitzungsschlüssel X(K) an den Server 30. Der Server 30 verwendet einen privaten Schlüssel, der zum öffentlichen Schlüssel X komplementär ist, um aus X(K) wiederum den Sitzungsschlüssel K zu gewinnen. Diese Schritte sind in Fig. 2 mit dem Bezugszeichen 54 zusammengefaßt.

Als Ergebnis der Schritte 54 haben nun sowohl der Server 30 als auch der Datenträger 10 Kenntnis von dem Sitzungsschlüssel K. Da dieser Sitzungsschlüssel K nie im Klartext übertragen wurde, ist er dem Bediengerät 24, über das die gesamte Kommunikation zwischen dem Server 30 und dem Datenträger 10 verläuft, unbekannt. Die in den folgenden Kommunikationsschritten zwischen dem Datenträger 10 und dem Server 30 ausgetauschten Daten sind sämtlich mit dem Sitzungsschlüssel K verschlüsselt, so daß das Bediengerät 24 allenfalls die verschlüsselten - und damit nutzlosen - Daten duplizieren könnte.

Um die eigentliche Übertragung der Mediendaten M zu beginnen, sendet der Datenträger 10 in Schritt 56 einen HTTP-GET-Befehl, der den in Schritt 48 an den Datenträger 10 übertragenen Dateinamen der gewünschten Mediendaten M enthält. Der Server 30 reagiert in Schritt 58, indem er die Mediendaten M in Form einer HTTP-Antwort über den Datenübertragungskanal 50 zum Datenträger 10 sendet. Die gesendeten Daten sind mit dem Sitzungsschlüssel K verschlüsselt. Der Datenträger 10 empfängt die verschlüsselten Daten K(M) und gewinnt daraus die ursprünglichen Mediendaten M, die in Schritt 60 in den beschreibbaren Speicher 22 des Datenträgers 10 geschrieben werden. Die Schritte 56 bis 60 können beliebig oft wiederholt werden, um mehrere Sätze von Mediendaten M zu übertragen.

Zum Abspielen der Mediendaten M wird der Datenträger 10 in ein geeignetes Abspielgerät (in den Figuren nicht gezeigt) eingelegt oder eingeschoben. Der Datenträger 10 ist so eingerichtet, daß er die in ihm gespeicherten Mediendaten M nur dann an das Abspielgerät ausgibt, wenn sich dieses bei dem Datenträger 10 erfolgreich authentisiert hat. Auf diese Weise wird verhindert, daß der Datenträger 10 die Mediendaten M an nicht-vertrauenswürdige Geräte, die möglicherweise das unbefugte Anfertigen von Kopien erlauben, ausgibt. In einer Variante kann auch das Bediengerät 24, z.B. der in Fig.1 gezeigte Computer oder die anderen oben erwähnten Geräte, als Abspielgerät dienen, sofern diese Geräte geeignete Mittel zum Kopierschutz aufweisen und sie sich gegenüber dem Datenträger 10 authentisieren können.

## Patentansprüche

1. Verfahren zum Laden von Mediendaten (M) in einen Speicher (14) eines tragbaren Datenträgers (10), der an ein externes Bediengerät (24) angeschlossen ist, mit den Schritten:
- Empfangen eines Ladeauftrags vom Bediengerät (24) durch den Datenträger (10),
- Aufbauen eines verschlüsselten Datenübertragungskanals (50) zwischen dem Datenträger (10) und einem vertrauenswürdigen, nicht-lokalen Server (30), auf dem die Mediendaten (M) vorliegen, und
- verschlüsseltes Übertragen der Mediendaten (M) über den Datenübertragungskanal (50) und Einschreiben der Mediendaten (M) in den Speicher (14) des Datenträgers (10).

2. Verfahren nach Anspruch 1, **dadurch gekennzeichnet, daß** der Datenträger (10) und der Server (30) über mindestens eines der Protokolle TCP/IP, UDP/IP, IPSec, TLS, SSL und HTTP, miteinander kommunizieren.

3. Verfahren nach Anspruch 1 oder Anspruch 2, **dadurch gekennzeichnet, daß** für das verschlüsselte Übertragen der Mediendaten (M) ein Sitzungsschlüssel (K) verwendet wird, der in einem zumindest gegenüber dem Bediengerät (24) ausspähungsgeschützten Verfahren zwischen dem Datenträger (10) und dem Server (30) vereinbart wird.

4. Verfahren nach Anspruch 3, **dadurch gekennzeichnet, daß** der Sitzungsschlüssel (K) von einem Gerät aus der durch den Datenträger (10) und den Server (30) gebildeten Gruppe generiert wird, und daß der Sitzungsschlüssel (K) dann mit einem öffentlichen Schlüssel (X) des anderen Gerätes aus der genannten Gruppe verschlüsselt und in verschlüsselter Form an dieses andere Gerät gesandt wird.

5. Verfahren nach einem der Ansprüche 1 bis 4, **dadurch gekennzeichnet, daß** der Datenübertragungskanal (50) physikalisch über das Bediengerät (24) verläuft.

6. Verfahren nach einem der Ansprüche 1 bis 5, **dadurch gekennzeichnet, daß** von dem Bediengerät (24) ein Browser ausgeführt wird, um eine Benutzerschnittstelle zum Initiieren des Ladevorgangs bereitzustellen.

7. Verfahren nach einem der Ansprüche 1 bis 6, **dadurch gekennzeichnet, daß** die im Datenträger (10) gespeicherten Mediendaten (M) in einem Abspielgerät nur nach erfolgreicher Authentisierung des Abspielgerätes gegenüber dem Datenträger (10) wiedergegeben werden.

8. Datenträger (10) mit einem Prozessorkern (12) und einem Speicher (14), wobei der Prozessorkern (12) zur Ausführung eines Verfahrens zum Laden von Mediendaten (M) in den Speicher (14) des Datenträgers (10) nach einem der Ansprüche 1 bis 7 eingerichtet ist.

9. Datenträger (10) nach Anspruch 8, **dadurch gekennzeichnet, daß** der Datenträger (10) frei von Bedienungs- und Anzeigeelementen ist.

10. Computerprogrammprodukt, das Programmbefehle aufweist, um einen Prozessorkern (12) eines tragbaren Datenträgers (10) zu veranlassen, ein Verfahren zum Laden von Mediendaten (M) in einen Speicher (14) des Datenträgers (10) nach einem der Ansprüche 1 bis 7 auszuführen.

## Claims

1. A method for loading media data (M) into a memory (14) of a portable data carrier (10) connected to an external operator device (24), comprising the steps:
- receiving by the data carrier (10) of a loading job from the operator device (24),
- setting-up of an encrypted data transfer channel (50) between the data carrier (10) and a trustworthy, non-local server (30) on which the media data (M) are held, and
- encrypted transfer of the media data (M) via the data transfer channel (50) and writing of the media data (M) into the memory (14) of the data carrier (10).

2. A method according to claim 1, **characterized in that** the data carrier (10) and the server (30) communicate with each other via at least one of the protocols TCP/IP, UDP/IP, IPSec, TLS, SSL and HTTP.

3. A method according to claim 1 or claim 2, **characterized in that** a session key (K) agreed between the data carrier (10) and the server (30) in a process that is spying-protected at least from the operator device (24) is used for the encrypted transfer of the media data (M).

4. A method according to claim 3, **characterized in that** the session key (K) is generated by a device from the group formed by the data carrier (10) and the server (30), and the session key (K) is then encrypted with a public key (X) of the other device from said group and is sent in encrypted form to that other device.

5. A method according to any one of claims 1 to 4, **characterized in that** the data transfer channel (50) physically goes via the operator device (24).

6. A method according to any one of claims 1 to 5, **characterized in that** a browser is run by the operator device (24) in order to provide a user interface for initiating the loading operation.

7. A method according to any one of claims 1 to 6, **characterized in that** the media data (M) stored in the data carrier (10) are played back in a play-back device only after successful authentication of the play-back device with the data carrier (10).

8. A data carrier (10) having a processor core (12) and a memory (14), the processor core (12) being configured to carry out a method for loading media data (M) into the memory (14) of the data carrier (10) according to any one of claims 1 to 7.

9. A data carrier (10) according to claim 8, **characterized in that** the data carrier (10) is free of operating and display elements.

10. A computer program product having program instructions for causing a processor core (12) of a portable data carrier (10) to carry out a method for loading media data (M) into a memory (14) of the data carrier (10) according to any one of claims 1 to 7.

## Revendications

1. Procédé pour le chargement de données de médias (M) dans une mémoire (14) d'un support de données (10) portatif, qui est raccordé à un appareil de commande (24) externe, comprenant les étapes suivantes :
- réception d'une commande de chargement de l'appareil de commande (24) par le support de données (10),
- mise en place d'un canal de transmission de données (50) codé entre le support de données (10) et un serveur (30) non local et digne de confiance, sur lequel les données de médias (M) sont présentes, et
- transmission codée des données de médias (M) par le canal de transmission de données (50) et enregistrement des données de médias (M) dans la mémoire (14) du support de données (10).

2. Procédé selon la revendication 1, **caractérisé en ce que** le support de données (10) et le serveur (30) communiquent entre eux au moyen de l'un des protocoles suivants : TCP/IP, UDP/IP, IPSec, TLS, SSL et HTTP.

3. Procédé selon la revendication 1 ou la revendication 2, **caractérisé en ce que**, pour la transmission codée des données de médias (M) on utilise une clé de session (K), qui est convenue dans un procédé protégé contre l'espionnage au moins vis-à-vis de l'appareil de commande (24) entre le support de données (10) et le serveur (30).

4. Procédé selon la revendication 3, **caractérisé en ce que** la clé de session (K) est générée à partir d'un appareil provenant du groupe formé par le support de données (10) et le serveur (30), et **en ce que** la clé de session (K) est codée ensuite avec une clé (X) publique de l'autre appareil provenant du groupe cité et est envoyée sous forme codée à cet autre appareil.

5. Procédé selon l'une quelconque des revendications 1 à 4, **caractérisé en ce que** le canal de transmission de données (50) passe physiquement par l'appareil de commande (24).

6. Procédé selon l'une quelconque des revendications 1 à 5, **caractérisé en ce que** l'appareil de commande (24) met en oeuvre un logiciel de navigation pour mettre à disposition une interface utilisateur pour l'amorçage de l'opération de chargement.

7. Procédé selon l'une quelconque des revendications 1 à 6, **caractérisé en ce que** les données de médias (M) mémorisées dans le support de données (10) sont reproduites avec un appareil de lecture seulement après l'authentification réussie de l'appareil de lecture par rapport au support de données (10).

8. Support de données (10) avec un noyau de processeur (12) et une mémoire (14), le noyau de processeur (12) étant aménagé pour mettre en oeuvre un procédé pour le chargement de données de médias (M) dans la mémoire (14) du support de données (10) selon l'une quelconque des revendications 1 à 7.

9. Support de données (10) selon la revendication 8, **caractérisé en ce que** le support de données (10) est exempt d'éléments de commande et d'affichage.

10. Produit de programme informatique, qui présente des instructions de programme pour ordonner à un noyau de processeur (12) d'un support de données (10) portatif pour mettre en oeuvre un procédé pour le chargement de données de médias (M) dans une mémoire (14) du support de données (10) selon l'une quelconque des revendications 1 à 7.
